# EUROPEAN PATENT APPLICATION

(11) **EP 1 962 237 A2**
(43) Date of publication of application: **27.08.2008**
(21) Application number: 07119127.4
(22) Date of filing: 24.10.2007
(51) Int. Cl.: G06Q 10/00

(54) **Warehouse system and method for maintaining the location information of storage units in a warehouse**

(30) Priority: 09.03.2007 FI 20075163; 26.10.2006 WO PCT/FI2006/050461
(71) Applicant: A-LAB OY, 42700 Keuruu (FI)
(72) Inventor: Ruokolainen, Antti, 42700 Keuruu (FI)
(74) Representative: Helke, Kimmo Kalervo

(57) **Abstract**

The invention concerns a warehouse system (10), which includes
- a large number of individuated storage units (11.1 - 11.10),
- a warehouse (12), in which the storage units are arranged to be stored in storage locations,
- a central unit (21), by means of which a database (13) is arranged to be maintained on the storage situation of the warehouse, in which database data (14.1 - 14.10) is arranged to be maintained concerning at least the storage units stored in the warehouse and the storage location of the storage units, and
- a transfer device (15) for handling the storage units, which is equipped with data-entry means (16.1 - 16.3) for entering data concerning storage and data-transfer means (17) for transferring data to the central unit. In the system, at least some of the storage locations of the storage units are arranged to be defined from the data in the database itself, indicating the storage units already in the warehouse.

## Description

The present invention relates to a warehouse system, which includes
- a large number of individuated storage units,
- a warehouse, in which the storage units are arranged to be stored in storage locations,
- a central unit, by means of which a database is arranged to be maintained on the storage situation of the warehouse, in which database data is arranged to be maintained concerning at least the storage units stored in the warehouse and the storage location of the storage units, and
- a transfer device for handling the storage units, which is equipped with data-entry means for entering data concerning storing and data-transfer means for transferring data to the central unit.

The invention also relates to a corresponding method for maintaining location information in the warehouse, a program product for implementing the method, a warehouse information system, and a transfer device.

Various kinds of warehouse systems are known from the storage of different kinds of articles, packages, and storage units. One example of these is a traditional fork-lift truck warehouse, arranged in an open rectangular space, in which several units can be stored on top of each other in a single floor location.

A rectangular fork-lift truck warehouse generally forms a matrix-like arrangement, in which there is at least one transverse aisle for fork lifts and a large number of storage-location lines intersecting the transverse aisle, for the units being stored. There can be a large number of storage-location lines next to each other along the aisle and intersecting it at right angles, so that the storage units may form rows parallel to the fork lift aisle. The articles can, according to their character, be also, for example, stacked on top of each other, in which case there will be no shelves in the warehouse, or the articles can even be heaped on the floor. Of course, a shelf, or, for example, a suspension system can also be possible. It can then be of, for example, a modular type, so that it can be adapted (dismantled or assembled), as the warehouse filling situation changes.

The prior art for maintaining information on the warehouse situation, such as for example the location information of storage units is represented by various kinds of database-based systems. One first way is to equip the storage locations with discrete identifiers in the various dimensions of the warehouse. An unambiguous location in the warehouse can then be defined for each storage unit/product batch formed by the storage units, location information on which can then be recorded in a database as essentially own information concerning specifically each unit/product batch. The identifiers can be, for example, on the walls of the warehouse, from where they can be read and recorded in the database, when a unit is brought to the warehouse. However, each individual storage location can also be equipped with a specific identifier, which can be, for example, on the floor at the storage location in question.

Further, various positioning technologies are known, which can be applied attached to both storage units and fork lifts. When a fork lift lowers a unit into place, this processing event triggers the positioning process. The location data obtained from the positioning is transferred, together with the identification data of the unit, to the warehouse database, in which the location data is recorded together with the unit data.

However, significant drawbacks are associated with discrete identifiers of a storage location, as well as difficulties in maintaining the warehouse situation. If the identifiers are, for example, on the walls of the warehouse, they will be extremely difficult to read, especially when the locations next to the wall in the warehouse are already full. Identifiers on the floor wear off easily and are also difficult to read, for example, by a remote reader, or the fork-lift truck driver.

Positioning also involves inaccuracy problems, if the units are very close to each other in the warehouse and otherwise, because the precision achieved by positioning is less than the dimensions of the storage units handled by the fork lift. If units are stored very close to each other, even greater demands are placed upon the accuracy of the unambiguous definition of the location of the unit in the warehouse. In that case, the reading of the location identifiers is also prevented, because the identifier information concerning the locations can no longer be read from the wall, due to no space remaining between them, never mind that the truck driver could not squeeze between them to check it. The storage of products in heaps is also associated with vague location information.

Yet another reference to the prior art in warehouse systems involves WO publication 02/14968 A1. However, the solution disclosed in it is not suitable for warehouses in which the storage units are not stored, for example, tightly against each other, never mind for heap storage. The solution is also poorly applicable to the random filling of a warehouse. In addition, within the scope of this solution it is scarcely possible to vary the storage-location arrangement.

The present invention is intended to create an improved way to maintain the storage situation of a warehouse, and even more particularly to define the location of a storage unit in the warehouse, on only the basis of the database. In addition, the invention is intended on the one hand to simplify and on the other hand to diversify the use of different kinds of identifiers in a warehouse. The characteristic features of the storage system according to the invention are stated in the accompanying Claim 1. In addition, the invention also relates to a method for maintaining location information in a storage system, the characteristic features of which method are stated in Claim 7, as well as a corresponding program product, the characteristic features of which are stated in the Claim 13.

In the solution according to the invention, operation is surprisingly only on the basis of the database information. Through the invention, it is unnecessary to maintain in the database specific storage location data concerning each unit. This information can be defined and can be maintained in a surprising manner from the database itself and, even more particularly, from the identifier data of the stored units, because the storage-location arrangement used in the warehouse is known, as is the location, relative to each other, of the units equipped with identifiers.

According to one preferred embodiment, the storage units can be arranged in the database in a relative manner to each other, in which case, when the storage arrangement used in the warehouse is also known, the individual location of each unit in the warehouse can be defined from such a manner of arrangement.

The storage units can be individuated. According to one embodiment, the units can be equipped with identifiers, which can be, for example, remotely readable. An embodiment implemented without physical identifiers is also, of course, possible. The system also includes a transfer means equipped with data-transfer means, which is equipped with data-entry means for entering data relating to storage and for transferring them to the database.

According to a second embodiment, it is also possible to utilize one or more datum obtained from the processing event of the unit. This will achieve both greater certainty for setting the unit in place and a recovery functionality for the information system.

The invention simplifies the arrangement of a warehouse. The use of the invention eliminates the need to set absolute storage-location identifiers for each storage location. In addition, the need for positioning technologies is removed, as these can be inaccurate and lead to cost pressures in the implementation of warehouses. The invention additionally also improves the possibility to adapt storage locations to take different situations better into account.

The other characteristic features of the invention will become apparent from the accompanying Claims and the other advantages achieved by using the invention are referred to more fully in the description portion.

The invention, which is in no way restricted by the embodiments described in the following, is examined in greater detail with reference to the accompanying figures, in which
- Figure 1: shows a schematic diagram of one example of the warehouse system according to the invention,
- Figure 2a: shows a flow diagram of a first example of an application of the method according to the invention, when storing a unit,
- Figure 2b: shows a flow diagram of a second example of an application of the method according to the invention, when storing a unit,
- Figure 3: shows a flow diagram of an example of application, when updating the database,
- Figures 4a - 4d: show some examples of applications of ware-house situations,
- Figures 5a - 5d: show examples of database contents, corresponding to the warehouse situations of Figures 4a - 4d,
- Figure 6: shows a flow diagram of an example of an application, for defining the location of a unit in a warehouse,
- Figure 7: shows a flow diagram of a third example of an application of the method according to the invention, when storing a unit, and
- Figure 8: shows an example of a graphical presentation, which can be printed from the database information.

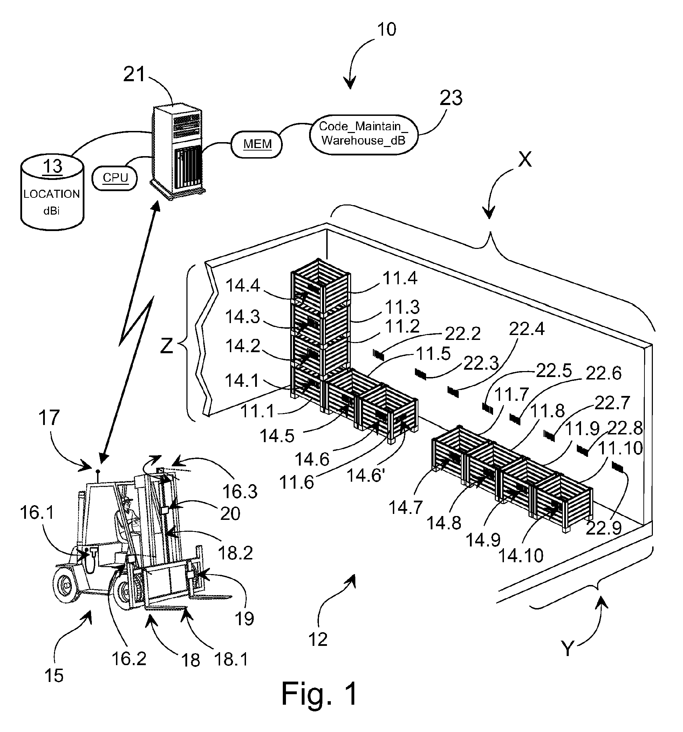

Figure 1 shows a schematic diagram of an example of the warehouse system 10 according to the invention. The main components belonging to the system 10 include a warehouse space 12, storage units 11.1 - 11.10 stored in it, a central unit 21 for maintaining the warehouse situation, and a transfer device 15, by means of which the storage units 11.1 - 11.10 can be handled in the warehouse 12.

The invention does not restrict the quality or contents of the units being stored in the warehouse 12. One example that can be referred to is fresh produce. Some examples of this are potatoes, cucumbers, tomatoes, beetroot, carrots, turnips, swedes, sugar beet, plums, oranges, bananas, etc. In general, in the case of fresh produce it is possible to refer to vegetables, root crops, and/or fruit, the central basic ides of the invention not being restricted to precisely these, or even in general to only fresh produce. Paper reels, pulp bales, sawn-goods bundles, pallets, and metal and cable reels are some examples of possible storage units.

In the warehouse 12 there are a great number of storage units 11.1 - 11.10 intended to be stored. According to a first embodiment, they can be, for example, as such known rectangular boxes intended for storing fresh produce. However, the basic idea of the invention does not restrict the concept 'storage unit' to precisely boxes, or to other media known from storage, but instead the invention can be applied even to heap storage without actual boxes, or other means of keeping goods together. In addition, the concept 'storage unit' can be equally understood as a product batch, which can include several boxes or heaps.

Generally, such a box 11.1 - 11.10 is a cage-like structure open on top, but other kinds of box too can, of course, come into question. The boxes 11.1 - 11.10 can even be without any kind of 'intelligence'/data-transfer functionality, in which case the boxes only have the property of keeping the products in a compact arrangement. Nevertheless, their location can be defined and recorded in the database 13. The boxes 11.1 - 11.10 can be of a size, for example, in the order of magnitude of a cubic metre and can be handled, for example, using a fork-lift truck 15, or a corresponding fork and/or grab transfer device.

In the invention, the boxes 11.1 - 11.10 are individuated in a set manner. In this connection, individuation can refer, for example, to the fact that each box 11.1 - 11.10 or heap can be identified as its own unit independent of the others. Individuation can also be understood as being product-batch-specific. In that case, the product batch will form its own individuated unit.

The boxes 11.1 - 11.10, or at least some of them can be equipped with one or more readable identifiers 14.1 - 14.10, 14.6'. If interest is focussed on individual boxes 11.1 - 11.10, then each box can be equipped with an identifier that unambiguously individuates it. When it is wished to store/monitor, for example, a product batch, which includes two or more boxes, there can be a product-batch identifier as well as or instead of the individuating identifier in the boxes 11.1 - 11.10. If interest is focussed on only product batches, some of the boxes can then be entirely without a physical identifier attached to them. In such a case, the boxes forming part of the product batch in question are identified, for example, according to the identifier of the first box.

In the invention, the storage-unit identifiers 14.1 - 14.10, 14.6' can be implemented in several different ways. According to a first embodiment, the identifiers can be printed on a suitable base by a printing device, for example, barcodes printed on paper and readable from it. On at least one side of the box 11.1 - 11.10, there can be a frame or similar holder for the barcode 14.1 - 14.10, 14.6', to which the readable barcode 14.1 - 14.10, 14.6' can be attached. The barcode, or the identifier in general can be permanently in the box 11.1 - 11.10. Another way is to equip the boxes 11.1 - 11.10, or at least some of them with an electronic identifier, which can be of a remotely-readable type. One example of this can be an RFID tag (not shown). Other kinds of smart identifiers are naturally also possible.

In the warehouse 12 there are several storage locations for the storage units 11.1 - 11.10. Each unit 11.1 - 11.10 is arranged to be stored in individuated storage locations, which permits adaptability. The individuation of the storage locations can also be varied in many ways. In the case of boxes, it is possible to apply, for example, 3D storage, as described later in greater detail. If the products are stored, for example, in heaps tipped onto the floor of the warehouse 12, 2D, or even only 1D storage can then be applied. In 2D storage, the heaps are discrete and thus can be identified from each other from a queue-row arrangement. In 1D storage at its simplest, material belonging to the same product batch can form elongated heaps, which extend from one end of the queue to the other. Each queue contains only material belonging to one product batch, so that each queue itself forms its own individuated storage location.

For individuation, the warehouse 12 can be equipped with storage-location identifiers 22.1 -22.9. In that case, the location of each unit 11.1 - 11.10 can be defined entirely unambiguously from the warehouse 12, once the location arrangement of the warehouse 12 at the time is known.

The central unit 21 belonging to the system, which can be, for example, a PC computer equipped with suitable software, can be used to maintain a database 13 or similar data system of the storage situation of the warehouse 12.

For this purpose, the server 21 is equipped with a memory MEM and a processor CPU. In the memory MEM is arranged program code 23, which includes one or more code means, which can be run using the processor CPU. The program code 23 can be used to perform the maintenance of the warehouse bookkeeping 13 in a manner according to the invention and related operations, such as adding units 11.1 - 11.10 to the warehouse 12, removing them from the warehouse 12, or responding to location-data queries, in order to determine the location of some specific storage unit. The invention also relates to such program code 23. In addition, the computer 21 can be equipped, for example, with wireless communications means, using which it can, for example, receive storage events from the warehouse 12 (not shown).

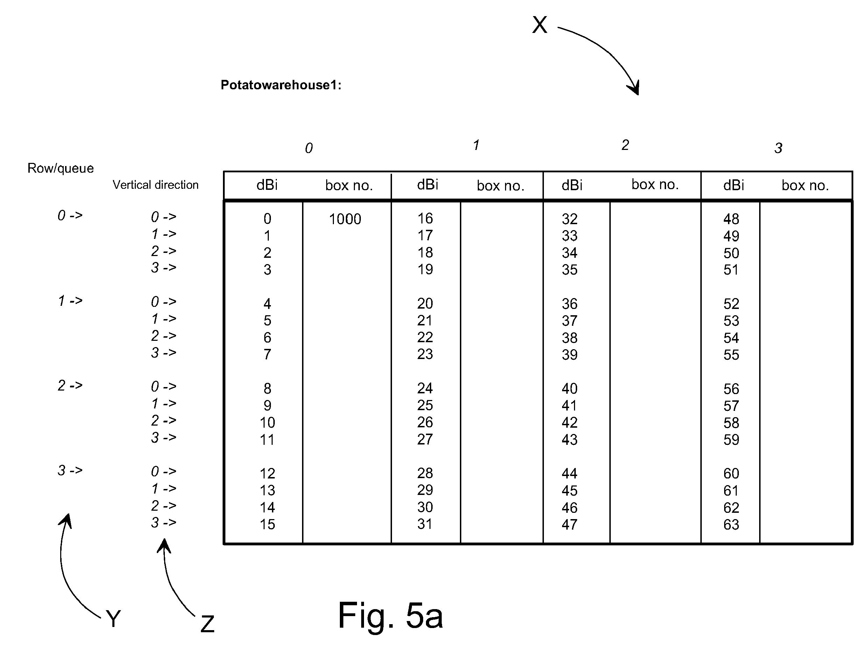

In the database 13 of the computer 21, information can be maintained concerning at least the storage units 11.1 - 11.10 stored in the warehouse 12. Some examples of applications of the database 13 are shown in Figures 5a - 5e. At least each storage unit 11.1 - 11.10, which is indicated in the case according to the application example by the barcode in the storage-unit identifier 14.1 - 14.10, stored in the warehouse 12 can be recorded updatably and readably in the database 13. In addition, the storage location of the storage units 11.1 - 11.10 are also shown in the database 13 and are maintained in the invention in an especially surprising manner, without reference to the actual storage location. This is because, in the invention, at least some of the storage locations of the storage units 11.1 - 11.10 can be defined from the information 11.1 - 11.10, 14.1 - 14.10 in this warehouse database 13 itself, indicated by the storage units 11.1 - 11.10 already in the warehouse 12. More detailed examples of applications of these manners of implementation are given later in the description.

Further, the warehouse system 10 can additionally include a transfer device 15. It can be, for example, one or more fork-lift trucks, automatic guided vehicles, or similar mobile device equipped with handling means 18 for the units 11.1 - 11.10. The fork lift 15 can be used to handle the storage units 11.1 - 11.10. Here, the term handling can be understood, for example, as transporting the units 11.1 - 11.10 to the warehouse 12, from the warehouse, and in the warehouse. In addition, handling can also include detaching from the unit 11.1 - 11.10 at the end of the transfer event, as well as picking up a unit 11.1 - 11.10 to move it.

The fork lift 15 can also be equipped with data-entry means for entering data on storage. The data-entry means can consist of, for example, reader means, such as one or more stationary or mobile barcode readers 16.1 - 16.3. An arrangement of this kind based on reader devices is very flexible. In addition, it permits adaptability of the location arrangement of the warehouse 12. According to one embodiment, the reader device is at least one barcode remote reader 16.1 - 16.3. These can be arranged, for example, in connection with the lifting boom 18.2 and/or the forks 18.1 of the truck 15, in such a way that they can be used to read barcodes from the boxes 11.1 - 11.10.

The readers 16.1 - 16.3 can also be oriented to different sides of the boom 18.2, or they can be orientable, for example, just as the reader 16.3 is. The orientation can be, for example, relative to the direction of travel of the fork lift 15 forwards and to the sides. Some of these reader devices 16.1 can be of a manually operated mobile type. This allows the driver of the fork lift 15 to perform the reading of different kinds of identifiers 14.1 - 14.10, 22.1 - 22.9, by getting off the fork lift 15 with the reader 16.1, next to the barcode. The reader devices 16.1 - 16.3 can be used to read different kinds of identifier, for example, storage unit identifiers 14.1 - 14.10 and/or storage location identifiers 22.1 - 22.9.

Instead of, or along with the reader devices 16.1 - 16.3, the driver of the fork lift truck 15 can also enter information relating to storage through a user interface, with which the fork lift 15 can be equipped. Particularly entering reach information, concerning a storage location, through a user interface may be preferable, because reach information (e.g., X: 3) at least is more limited than the identifier data (e.g., box no. 11134543) of the boxes 11.1 - 11.10. The fork lift 15 is also equipped with data-transfer means 17, for example, for transferring identifier data 14.1 - 14.10 concerning the units 11.1 - 11.10 and/or identifier data 22.1 - 22.9 concerning locations, to the database 13 of the central unit 21, depending on the embodiment.

Thus, the storage-unit handling means of the fork lift 15 include lifting means 18. Detector means 19 are arranged in connection with the ascending and descending handling element 18, for detecting a handling event of the storage units 11.1 - 11.10. Of course, the detector means can be elsewhere in the fork lift 15, for instance in its suspension. According to one embodiment, the detector means can comprise a force sensor 19, by means of which the load or lack of load in the handling means 18.1 at any time can be detected. Through this, it can be determined, for example, how many units 11.1 - 11.10 were taken to/from the warehouse 12, as well as whether a unit 11.1 - 11.10 has been left in the warehouse 12. The driver of the fork lift truck 15 can also enter the number of boxes brought to the warehouse 12. In practice, the operating principle of the force sensor corresponds to a scale, so that it can be based on, for example, a strain-gauge sensor. Another example of the sensor can be an optical sensor (not shown).

The detector means of the lifting means 18 can comprise, in addition, a detector 20, for detecting the handling height of the storage units 11.1 - 11.10. At its simplest, the detector can measure the amount of hydraulic fluid in the boom's 18.2 reservoir, but more highly developed embodiments will also be obvious to one versed in the art. The detector can be used to detect the height position of the truck forks 18.1 on the lifting boom 18.2. This makes it possible to detect the height position of the load 11.1 - 11.10 being picked up by the fork 18.1, or being set down by the fork 18.1. From this information, it is possible to determine the location, in the vertical i.e. Z direction (storage level) of the unit/units 11.1 - 11.10 picked up from the storage location/set down at the storage location.

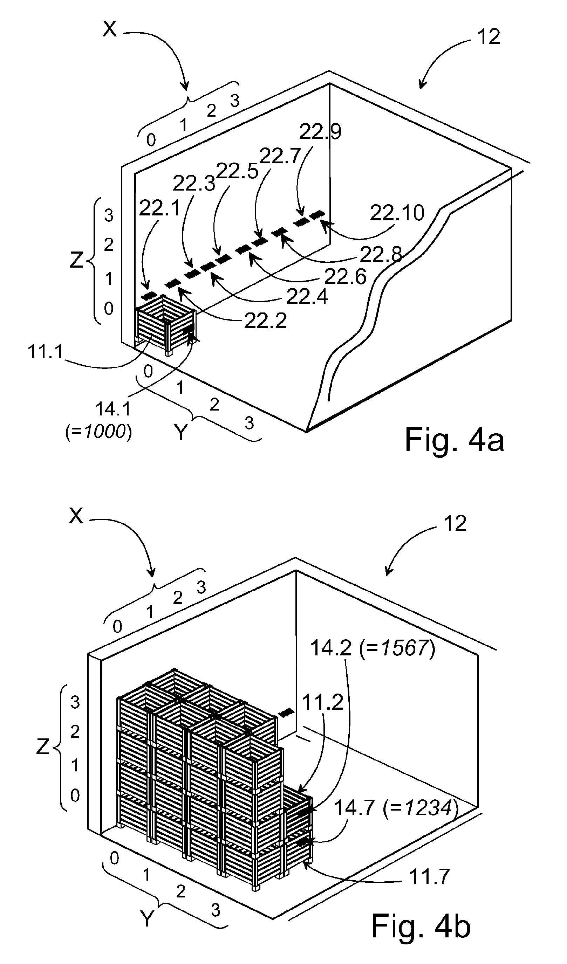

The following description is of one example of a storage-location arrangement used in the warehouse 1 2, with reference to Figure 4a. It must be understood, that the basic idea of the invention is not, of course, intended to be restricted to such a box-shaped arrangement, but that other kinds of arrangement too will be obvious to one versed in the art, as described hereinafter.

In the invention, the possible storage locations can form, in a manner that is as such known, for example, a storage arrangement comprising three dimensions X, Y, Z. In a 3D arrangement, the storage units 11.1 - 11.10 can be stored in the X direction in queue formations, several of which are arranged parallel to each other in the Y direction. In the queues in the X direction, the storage units 11.1 - 11.10 can also be arranged, for example, in stacks of two or more, thus forming the vertical dimension Z in the warehouse 12. Of course, such an embodiment is also possible, in which storing takes place in only two dimensions, i.e. Z = 0. One such example is the storing of products in heaps.

It should be noted that the invention requires no connection based on electrical phenomena between the boxes 11.1 - 11.10. Between the box rows (Y) and queues (X), there can be an air gap, which can be very small. The invention will function with no galvanic, capacitive, or inductive connection between the boxes, the boxes 11.1 - 11.10 being thus electrically unconnected to each other. In addition, no particular smart/data-transfer functionality is required of a box 11.1 - 11.10, which can instead be of even a very simple basic model.

The warehouse 12 shown in Figure 4a forms a 3D arrangement, which is formed of four queues X = 0 - 3 in the X direction, four rows Y = 0 - 3 in the Y direction, and four layers Z = 0 - 3 in the Z direction. This allows a maximum of 64 boxes to be stored in such a 4*4*4 warehouse 12. It must be understood that the warehouse can be considerably larger than this. As many as 5 - 7 boxes can be stacked on top of each other. Here, a warehouse arrangement of the kind shown has been used to simplify the description.

Storage-location identifiers 22.1 - 22.10 may have been arranged in at least one of the dimensions X, Y, Z of the warehouse 12, for example, the queues in the X direction, to individuate the location of the storage units 11.1 - 11.10 in the relevant dimension X. The identifier 22.1 - 22.10 can also be of a barcode, being, for example, a remotely readable type. Of course, the other dimensions Y and/or Z too can also be equipped with these identifiers that are equivalent to co-ordinates, though this is in no way essential in terms of the invention. This is because, if the warehouse 12 is filled and emptied in order (systematic sequential filling), and this takes place in a specific, regular manner, there will be no need to arrange these readable location identifiers 22.1 - 22.10. The totality management according to the invention eliminates the need for information on a full co-ordinate presentation of each storage location, for example, when storing a unit. In the invention, it is possible to make do with, for example, only information on a single dimension, or without even that, depending on the embodiment. The identifiers 22.1 - 22.10 can be used, for example, when random filling is performed in the warehouse 12. In that case, new boxes can be brought to any queue at all in the warehouse 12, even though the locations in the other queues might not yet even be full. The identifiers 22.1 - 22.10 can be, for example, on the front/rear wall of the warehouse 12, from where they can be read using a reader 16.1 - 16.3, if operations take place in the vicinity of the wall. The identifiers 22.1 - 22.10 can also be on the ceiling of the warehouse 12, from where they can be easily seen by the fork lift truck driver and entered in the fork lift's 15 user interface in connection with a storing event.

Figure 5a shows a database 13 corresponding to the warehouse 12 according to Figure 4a. The database 13 stored on the server 21 is shown within a boxed area. In this case, the database 13 contains index/identifier pairs. The index field dBi refers here to increasing running database indices and the 'box no.' to a field reserved for an identifier 14.1 - 14.10 individuating the box 11.1 - 11.10.

The information outside the boxed area is, in this case, intended only to illustrate the XYZ location of the storage locations in the database 13, in a manner according to the invention. For reasons of illustration, in this case the database 13 is divided into four vertical columns, which correspond to the queues X = 0 - 3 (= the queue numbers above the boxed table) of the warehouse 12. In addition, the database 13 is also grouped into four horizontal rows, which correspond to the warehouse's 12 rows Y = 0 - 3 (the row numbers at the left-hand edge of Figure 5a). Further, in each row-queue location (X,Y) of the database 13 there is a group formed by four database locations. This depicts the boxes stacked on top of each other in one XY location. In each XY location, the lowest box location is referred to by the Z co-ordinate 0, the uppermost box location by the Z co-ordinate 3, and the box locations between them by the Z co-ordinates 1 and 2. The manner of presentation of the database 13 is selected solely to illustrate the basic principle of the invention. It will be obvious to one versed in the art that in reality the database 13 can equally well not be grouped, in which case the totality can be managed by a program.

According to one embodiment, the dBi indexing of the database 13 can be arranged in a regular manner according to consecutive storage locations, in a increasing running order. In a database 13 arranged in this kind of regular manner, the location of each box 11.1 - 11.10 in the warehouse 12 can be defined in a surprising manner from this database 13 itself, without the XYZ location data of each box needing to be maintained separately in the database 13, or even the location data needing to be maintained with an accuracy of a even single dimension. This is achieved by the indexing of the database 13 being linked in a regular manner to the storage-location arrangement of the warehouse 12, so that the location of each box 11.1 - 11.10 in the warehouse 12 can be determined from their mutual position to each other in the warehouse 12/database 13.

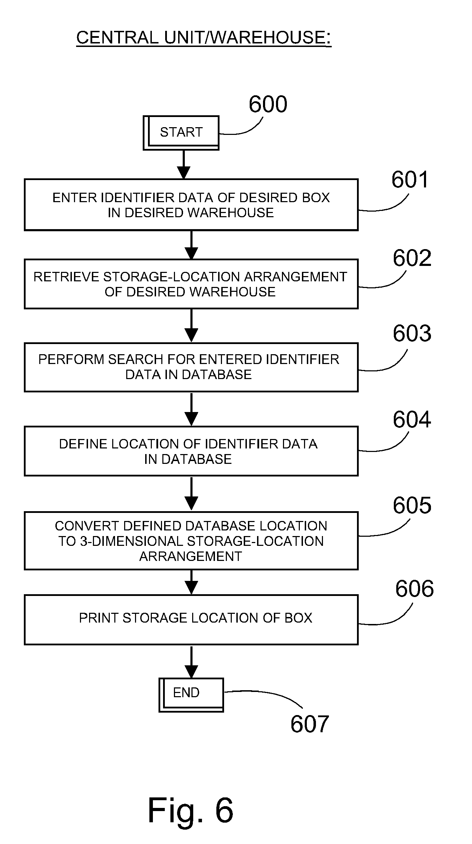

According to one embodiment, the database 13 can be indexed with running numbers, for example, so that its indexing dBi starts from the lowest box location of the XY location (0, 0), Z = 0 being there dBi = 0. The indexing dBi increases vertically until the vertical box locations Z = 0, 1, 2, 3 of the the XY location (0, 0) have been gone through, being then dBi = 3. The indexing dBi continues increasing according to the corresponding principle from the next XY location (0, 1), thus still being in the queue X = 0, in its second row Y = 1. Here, as in all the following XY locations, the indexing dBi runs from the bottom upwards in each XY location, in the aforementioned manner. Once in the last location of the queue X = 0, i.e. in the XY location (0, 3), and in the uppermost position of the location in question, when Z = 3 and the corresponding index dBi = 15, the next index dBi = 16 corresponds to the first location (1, 0) of the next queue X = 1, i.e. its row 0. From there, the indexing dBi continues to increase, proceeding correspondingly to the case of the first queue X = 0. If the database indexing dBi is arranged to increase regularly in this way, the three-dimensional position of each storage location can be easily determined from the database indexing dBi. The examination of Figure 6 will return to this algorithmic implementation in greater detail.

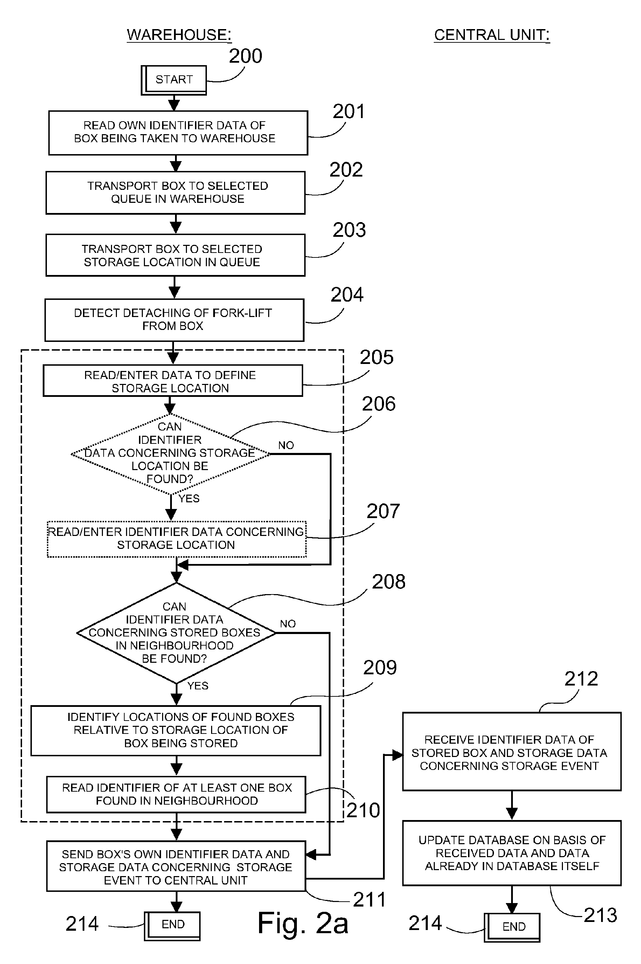

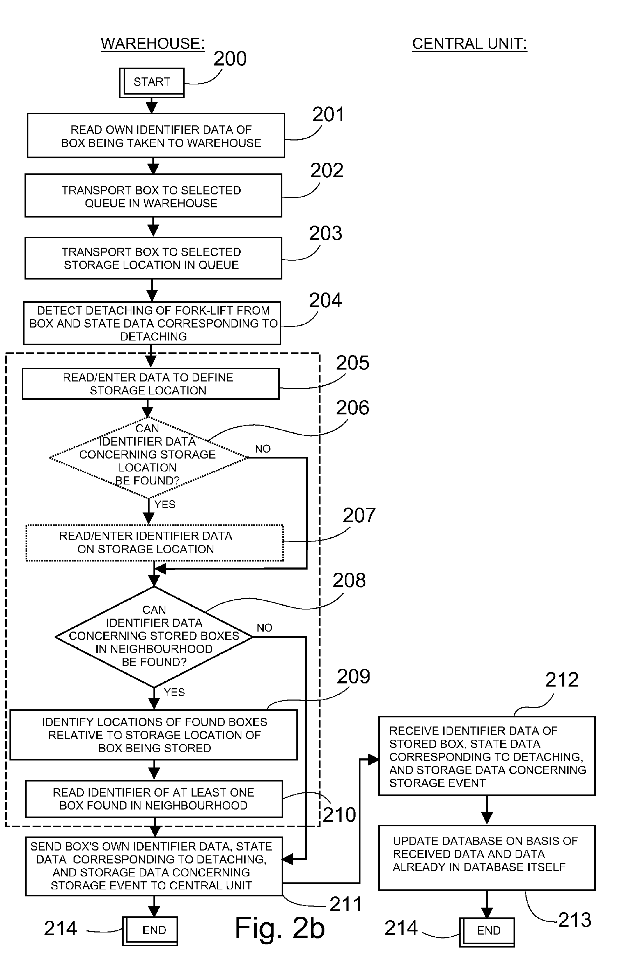

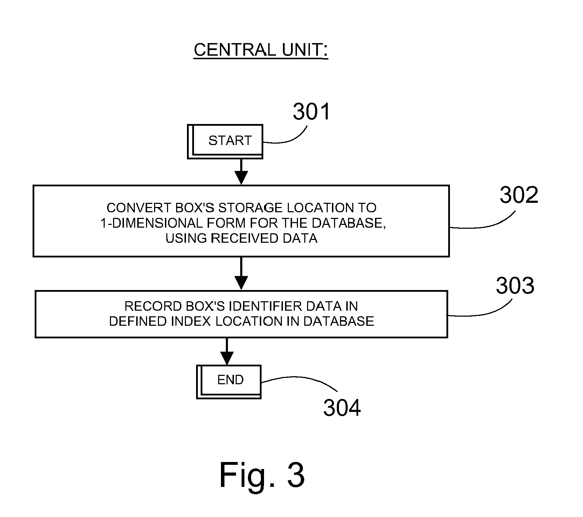

In the following, the system 10 according to the invention will be described in greater detail, with reference to Figures 4a - 4d showing warehouse situations as application examples, and to the procedural stages shown in Figures 2a, 2b, and 3.

First of all, the invention is examined with reference to Figures 2a and 4a. The filling of the warehouse 12 is now arranged to start from the XYZ location (0, 0, 0), to which the first box 11.1 is brought by the fork lift 15 at this time. In stage 201, the identifier data, which can be for instance 1000, of the box 11.1 now being transferred to the warehouse 12 can be read. This information is found by coding from the barcode 14.1 arranged on the box 11.1. The reading can be performed, for example, at the stage when the box 11.1 is picked up by the fork lift 15. The reading can, of course, be performed at some other stage than this, its time of performance being naturally not restricted in any way by the basic principle of the invention.

In stage 202, the box 11.1 is transported by the fork lift to the queue X = 0 and in stage 203 to the back of queue X = 0, i.e. to the first possible location. Because the question is now of queue X = 0 and now at the same time also of the first box of the entire warehouse 12, the storage location row of box 11.1 is Y = 0 and the XY location also layer Z = 0.

In stage 204, the detaching of the fork lift 15 from the box 11.1 is detected. This can take place without driver interaction by using the scales 19 in the handling means 18 of box 11.1, or by triggering in some other way. Detaching can also be detected, for example, by the driver of the fork lift 15, who acknowledges the drop off of the box 11.1 in its location, for example with the aid of the user interface (not shown) of the warehouse system in the fork lift 15.

In the next stage 205, information is read in order to define the storage location. This information can be, for example, the neighbourhood information of the dropped off box 11.1 and/or dimension information concerning its storage location. The neighbourhood and/or dimension information relating to stages 205 - 210 shown in a broken-line box in Figures 2a and 2b is read, which is of central importance in the invention, at least in the case of random filling. It must be noted that all the stages are not essential even in this case, depending, for example, on the manner of filling the warehouse 12 and/or on how the warehouse-management application 23 is implemented.

Within the context of the invention, the neighbourhood/dimension information can be understood very widely. Stage 206 can involve an investigation of whether dimension information can be found on the neighbourhood of the drop-off location, concerning the storage location of the dropped-off box 11.1, or in general any storage location information, from which this could be derived logically. Such information is now found from the front wall of the warehouse 12, as the matter concerns the first box 11.1 of the queue X = 0, so that this found storage location information is precisely X = 0.

The barcode X = 0 stating the storage location information can be read from the front wall of the warehouse 12 in stage 207. Reading is, of course, not essential, especially if the system knows that the question is of the first box of the warehouse 12 and that systematic sequential filling takes place in the warehouse 12, starting from the predefined starting point of the warehouse 12, i.e. from the XYZ location (0, 0, 0). In stage 207, it is additionally possible to also read a possible storage-location identifier from the side wall, i.e. Y = 0 and/or an identifier Z = 0 stating the location in the vertical direction, if such are to be found (not shown). Even the reading of these YZ identifiers is not essential in terms of the invention. However, they can be used to given greater certainty to the definition of the location of a box 11.1 brought to the warehouse 12. However, these data need not be recorded in the database 13.

Stage 208 can be a search for possible identifier information on boxes that may already have been brought to the neighbourhood of the box 11.1 brought to the warehouse 12 this time. As the box 11.1 that has been brought is now the first in the warehouse 12, this information will not be found, of course, and as a result the procedure now moves directly to stage 211.

In stage 211 data transfer takes place using the data-transfer means 17 of the fork lift 15, to the computer 21 maintaining the warehouse database 13. In this case, the data transfer concerns the box's 11.1 own identifier data 1000 and also one or more similar data (X = 0, Y = 0) of the storage location, read/entered from the wall, floor, etc. of the warehouse 12. The computer 21 receives the information in stage 212 and updates its database 13 accordingly in stage 213. As a result of the update, the database 13 appears in a form corresponding to that shown in Figure 5a. The storage event terminates in stage 214.

The following is a more detail examination of the updating of the database 13, with reference to Figures 3 and 5a as one example of an application, and in addition with reference to the storage event described immediately above and shown in Figure 4a.

In stage 302, after updating has started 301, the server 21 defines the recording location of the box 11.1 in the database 13. In other words, the server 21 can define the location of the box 11.1 in a 1-dimensional data structure from the received neighbourhood/dimension information. In stage 302 an investigation can be made as to whether, among other things, the received neighbourhood/dimension information of the storage location of the box 11.1 possibly comprises one or more storage-location data, which could be used to define the storage location of the box 11.1 itself in a 1-dimensional data structure. Because sequential filling of the warehouse 12 is now being performed, this sub-stage is not essential. The next sub-stage can be, instead of or along with the pervious sub-stage, to investigate whether the neighbourhood information of the box 11.1 comprises the identifier data of some box that has already been in the warehouse 12. Because this information too is not found, it can be decided from this that the box 11.1 brought to the warehouse 12 is the first in the warehouse 12.

To describe this updating procedure in more general terms, in stage 302 the storage location of the box 11.1 brought to the warehouse 12 is defined using the storage location and/or the identifier data found from neighbourhood and the information of the manner of filling the warehouse 12. If in stage 206, the neighbourhood/dimension information concerning the storage location is set to be read from only the barcode 22.1 on the front wall of the warehouse 12 and indicating the queue in the X direction, then in that case the location of the box 11.1 in the database 13 can be defined as dBi = X * max_X. Here, the variable max_X refers to the maximum number of boxes in the queue X. In the case according to the application example, the variable mx_X = 4 * 4 = 16.

Now, because the matter is of a box coming to the first location in the queue X = 0, and in general of the first box in the warehouse 12, its recording location in the database 13 will be dBi = 0 * 16 = 0. Correspondingly, if the box 11.1 had been brought as the first box in some other queue, for example, as the first box in the queue X = 2, its recording location in the database 13 would then have become dBi = 2 * 16 = 32. Thus the 3D co-ordinate form (X, Y, Z) = (0,0,0) of the storage location of the box 11.1 can be easily converted to a 1-dimensional vector form for database 13.

Some of the units 11.1 stored in the warehouse 12 can act as special fixed-point units in the warehouse 12. This is particularly so when the warehouse 12 is being filled randomly. The invention can also be used with no special fixed points, if systematic sequential filling of the warehouse 12, for example, is used, or if the reading/entry of information found from the neighbouring boxes is not applied, but only the reading/entry of dimensional information.

There can be at least one, but also several fixed-point units 11.1, depending on the algorithmic implementation of the invention and the manner of filling the warehouse 12. The location of the fixed-point units 11.1 in the database 13 can be defined on the basis of the location arranged used in the warehouse 12, for example, as described above. Boxes, which are the first (X, 0, 0) in each queue, for example, can act as the fixed-point units. In that case, when filling of the queue is started, the identifier of the queue can be read from the wall of the warehouse 12, and on its basis the recording of the box can be performed in the database 13 in the correct database index dBi location, which corresponds to the first storage location in the queue in question. When a new box is brought the next time to the next storage location at the location of the fixed-point unit 11.1, its recording location in the database 13 can be easily defined with the aid of this fixed-point unit 11.1, even though this might not be matter of the sequential filling of the warehouse 12.

In stage 303, the numerical identifier 1000 of the box 11.1, which is thus obtained from its barcode 14.1, is recorded in the point in the database 13 corresponding to the index dBi = 0. The procedure terminates in stage 304, as a result of which the database 13 looks like that shown in Figure 5a.

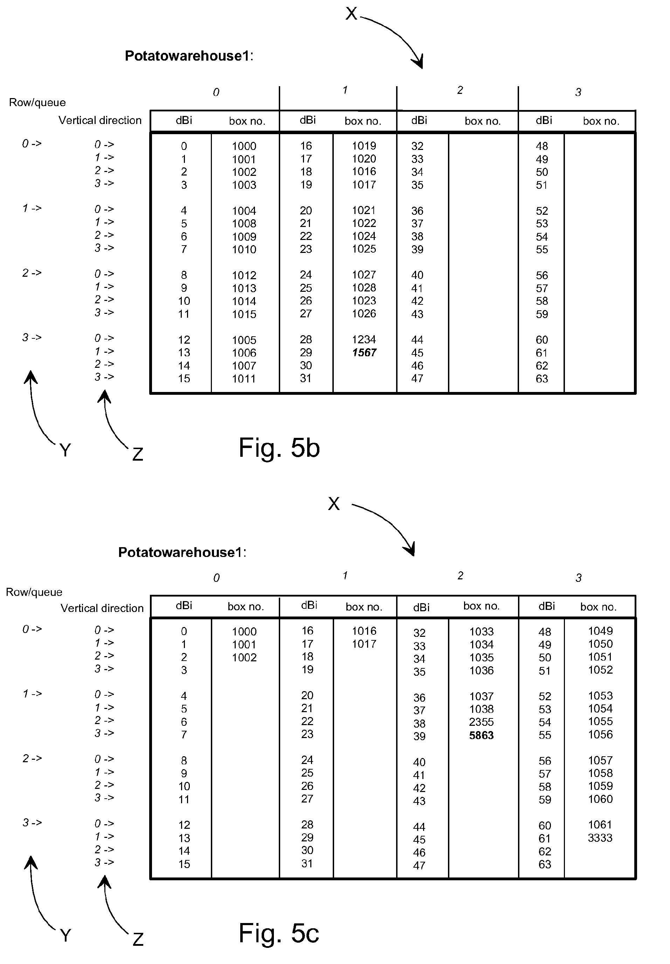

Figure 4b shows a second example of a warehouse 12, in which systematic sequential filling is also performed. A database 13 depicting a corresponding situation is now shown in Figure 5b, except for the bold box number location corresponding to the index dBi = 30. The queue X = 0 is now full and a storage location in the last row Y = 3 of the next queue X = 1 is being filled. In the XY location in question there is already one box 11.7 in the location Z = 0, so that the next free location, in which the box 11.2 can be stored in the row in question Y = 3 is (1, 3, 1) expressed in the XYZ form.

Here too, reference is made to the method diagram shown in Figure 2a, the sections of which that have already been described will not be unnecessarily reviewed again in this connection. In stage 201, the identifier 14.2 of the box 11.2 is read again, its value now being 1567. When, after the detaching stage 204, an attempt is made to read the storage location neighbourhood/dimension information in stage 205, more generally stated the information for defining the storage location, it will be noticed as stage 206, that this time it may not necessarily be found. This is because operations are now taking place on the outer edge of the warehouse 12, in which this location information is not necessarily arranged. However, through the invention this may not even be necessary.

Next, in stage 208, a search is made to find neighbourhood information concerning boxes that are already in the warehouse 12. Now this information is found. In stage 209, the location of the found box 11.7 is identified relative to the storage location of the box 11.2 that is now being stored. Because in this case the implementation according to sequential filling is arranged to be such that the identifier to be read is always the identifier 14.7 of the preceding box 11.7, the driver of the fork lift 15 will then go in stage 210 to read, with a manual reader 16.1, the identifier 14.7 of this box 11.7 that immediately preceded the box 11.2 now brought to the warehouse 12. Of course, the reading of stage 210 can also be performed using (orientable) readers 16.2, 16.3 in the fork lift 15. In that case, the driver need not leave the fork lift 15 at all.

The other stages can correspond in their essential parts to the embodiment already described above.

The following is a description of the updating of the database in a case according to this embodiment, with reference to Figures 3 and 5b. Further, the description presented previously, referring to Figure 3, is in this case still valid, except for the parts now to be described. In this case, there is thus no neighbourhood/dimension information available concerning the storage-location co-ordinates. Instead, in stage 302, neighbourhood information around it is available, most particularly the identifier 14.7 of the box 11.7 stored before it. On its basis, it is possible to define the relationship of the location of the box 11.2 now brought to the warehouse 12 to the one or more boxes 11.7 already in the warehouse 12.

In the implementation according to the invention, the storage units 11.2 - 11.10 in the warehouse 12 can be according to the arrangement of the storage locations arranged in the database 13, when it will be necessary to record only their storage unit identifier 14.2 - 14.10 in the database 13. Thus the location in the database 13 of the location of the storage units 11.1 - 11.10 relative to each other can be defined and set in a warehouse arrangement comprising the location data of the storage units 11.1 - 11.10 in three dimensions X, Y, Z.

Because the identifier (1234) of the box 11.7 preceding the box 11.2 that has just been brought to the warehouse 12 is known, a search for it can be performed in the database 13. When such a box number is found, the database index dBi corresponding to it is read. In this case, dBi = 29. Because the box 11.2 that was brought to the warehouse 12 this time was now stored as the immediate successor to the box 11.7 already stored in the warehouse 12 (on top of it), its identifier (1567) is recorded in the next index location dBi = 30 of the database 13. Stated more generally, in this stage, the relationship of the box 11.2 being stored to an adjacent box 11.7 is defined and the identifier (1567) of the box 11.2 being stored in placed in the database 13 defining the mutual relation of defined boxes 11.1, 11.7 in the storage locations. After this, the updating procedure can be terminated. After updating, the database's appearance corresponds to that shown in Figure 5b, including the bold box number (1567) of index dBi = 30.

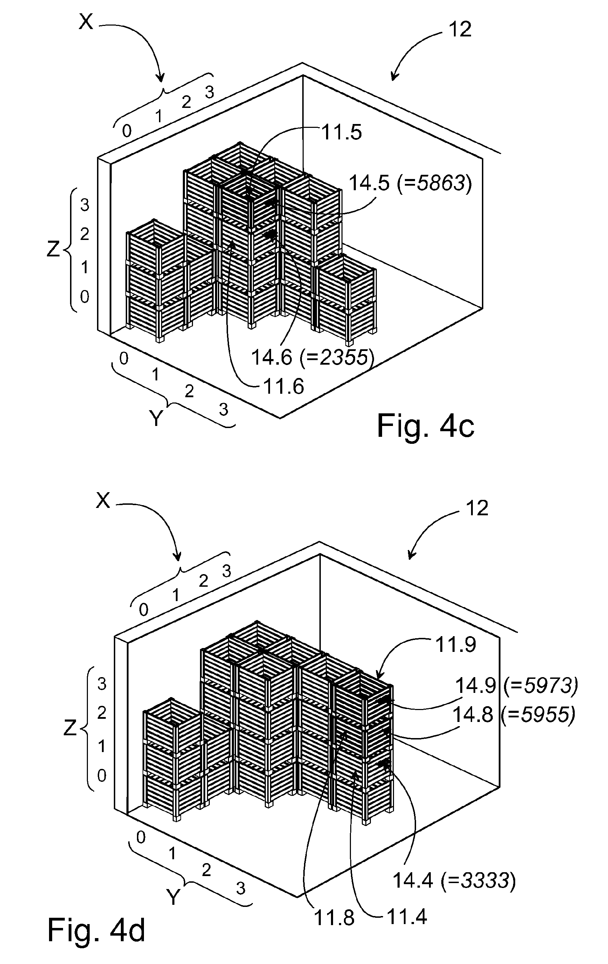

Figure 4c shows a situation, in which there is already a group of boxes in the warehouse 12 and in which the warehouse 12 has now been filled randomly. Filling of this kind can be performed, for example, when several products or product batches are stored in the same warehouse 12. In this case, the sequential filling applied in the embodiments described above has not been performed in the warehouse 12. Figure 5c shows a database 13 corresponding to the situation. A new box 11.5 (outlined in bold) is now brought to the queue X = 2. This time, the next free storage location of the row of the queue X = 2 is Y = 1. The matter is now of the uppermost storage location Z = 3 in this XY location (2, 1).

When the procedural stages performed in Figure 2a are performed as described above, it will be clear that the identifier 14.6 of the box 11.6 preceding the box 11.5 now brought to the warehouse 12 is (*2355*)*.* In this case too, the updating of the database 13 can be performed according to a principle corresponding to that already describe above. The database location dBi of the preceding box 11.6 is sought from the database 13 on the basis of its identifier (*2355*). Instead of, or as well as a search for the preceding box, the queue number/code of the storage location in question can also be given. Using this, it is possible to search for the first free location at the time in the queue in question from the record field dBi. Once the identifier (*2355*) has been found, and with it the fact that its dBi = 39, the identifier *(5863)* of the new box 11.5 is recorded in the box number field location corresponding to the next location index dBi = 40 of the database 13.

In the embodiments described above in stage 208-210, the identification of the box in the storage location immediately preceding the location of the box now being stored was applied. The basic principle of the invention is not intended to be fixed to any particular neighbourhood information, such as precisely this preceding box. Instead of, or in addition to this it is equally possible to also read the identifiers of one or more boxes in adjacent queues. However, a greater importance is then given to stage 209, in order that the relationship of the locations to each other is fixed correctly. Because the driver of the fork lift 15 knows the relative position of the reading objects to the boxes brought to the warehouse 12, the totality remains manageable. Of course, the driver of the fork lift 15 can also perform the reading arbitrarily, but in that case he must enter, for example in connection with reading, the location of a neighbouring box relative to the storage location of the box being stored on this occasion. For this embodiment, there can be identifiers on more than one side of the boxes (in Figure 1 the identifier 14.6' of box 11.6). The relative order of the boxes 11.1 - 11.10 to each other is of significance in the invention at least when defining their location from the database 13.

In the embodiment according to Figure 4c, one example of such a box readable from the side could be the box in the XYZ location (3, 2, 3), when storing the box 11.5. Once the fork lift 15 has left the box 11.5 in place, while lowering the lifting boom 18.1, it can use a reader 16.3 that can be aimed/oriented to the side, which is in the lifting boom 18.1, to read the identifier of the box in the location in question.

According to one embodiment, the vertical position of the box 11.5 being handled at the time can be decided from the length of the lifting boom 18.1. It is possible to operate correspondingly when picking up a box 11.5. The height of the box location being handled at the moment can be decided from the degree of protrusion of the telescoping boom 18.1, within certain human processing limits. However, the height dimension of the storage units is considerable, to an extent that the storage locations can be identified in the vertical direction from the height of the lifting boom. Thus there are also numerous embodiments for selecting the object of the reading.

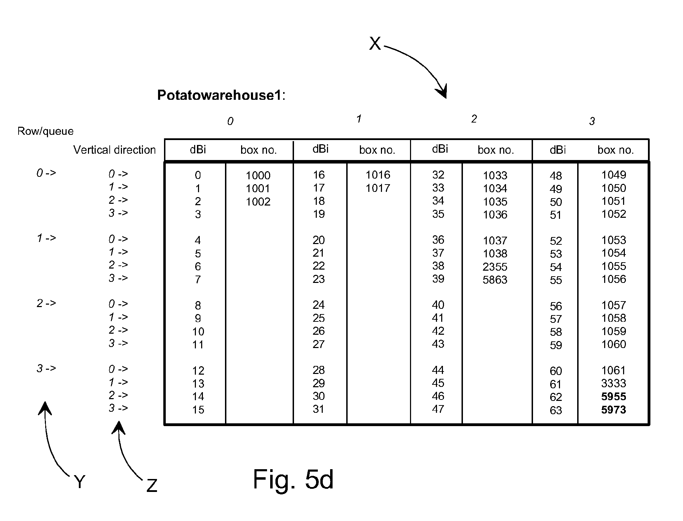

Figure 4d shows yet another warehouse situation, which can derive from the embodiment shown in Figure 4c. Figure 5d shows the database situation corresponding to it. The method is now described with reference to Figure 2b. There is no need to explain again all the identical sub-stages that have already been reviewed in Figure 2a, but only those that differ from them in the case of this application.

Here too, it is intended to perform random filling of the queues in the warehouse 12. Now two boxes 11.8, 11.9, whose identifiers are (*5955*) and (*5973*) are brought to the warehouse 12 at the same time. The boxes 11.8, 11.9 are now stacked on top of each other, in such a way that box 11.8 is on the forks 18.1 of the truck and box 11.9 is on top of it. The identifiers 14.8, 14.9 can have been read in stage 201, in order from the bottom to the top. In stage 204, not only is the detaching of the fork lift 15 from the boxes 11.8, 11.9 detected, but also the state information corresponding to the detaching.

This state information is now produced, for example, by a sensor 20 detecting the height of the boom 18.2 of the fork lift 15 and the load sensor 19 detecting the weight of the load on the forks. As the height of the boxes being stored is constant and the weight of the boxes is more or less known, as they contain products placed in them in a set manner, and in addition, because the detaching height of the boxes 11.8, 11.9 is known in addition to the detaching from the boxes 11.8, 11.9, it can be concluded from these data that the stack formed by the boxes 11.8, 11.9 brought to the warehouse 12 was lifted on top of some box 11.4 already in the warehouse 12, which is thus at this time the last box in the queue X = 3. The height data and information concerning the number of boxes brought/picked up is used to create additional certainty and a certain degree of recovery functionality for the database 13 when defining the location of the boxes 11.8, 11.9 being stored. If a contradiction appears between the defined location and the information provided by the sensors 19, 20, an alarm can be given and the driver of the fork lift 15 can check the situation.

In stage 211, data transfer is performed, now also including the state data corresponding to the detaching, which data transfer is received by the server 21 in stage 212. In stage 213, the database 13 is updated, based on not only the other data, but also the state data concerning the detaching height and the weight of the load. Both bring additional certainty to the maintenance of the warehouse bookkeeping. Correspondingly, as has already been explained many times above, the updating of the database 13 is performed, based on the identifier data 14.4 *(3333)* of the preceding box 14.4 and/or on the queue data (X = 3). After updating, the database 13 looks like that shown in Figure 5d.

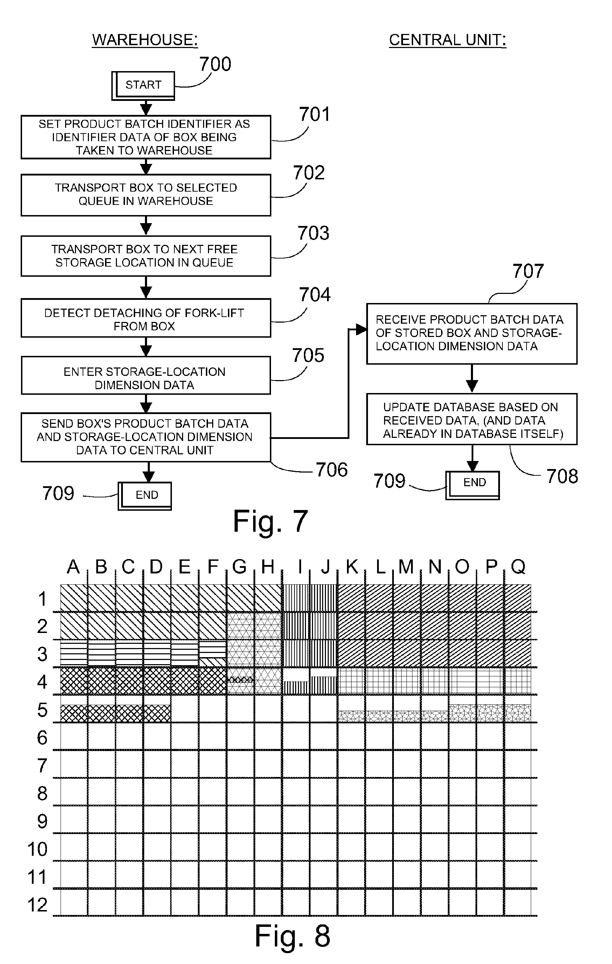

Figure 6 shows one way to convert 1-dimensional database information to an illustrative 3D form (X, Y, Z), from which a graphical presentation of the warehouse situation according to Figure 8 can also be formed. It is now wished to determine the place in the warehouse 12 at which a specific box is stored. This is explained with reference to Figures 4c and 5c.

After the initiating stage 600, the identifier data of the desired box in the desired warehouse ('Potatowarehouse1) is entered in stage 601. If there are several warehouses, their location settings can differ from each other. For this reason, the identification of the warehouse may also be necessary, if this is known. If the warehouse is not known, all the databases can be reviewed, in order to search for the desired box on the basis of its identifier.

In stage 602, the storage-location arrangement of the desired warehouse is retrieved. On its basis, the correct definition algorithm is selected for use. In stage 603, a search concerning the entered box is performed, in order to define its database location dBi. If the box that is the object of interest is box 11.5 (identifier 5863) in the case according to Figure 4c, this identifier is sought from the database 13 in stage 603. In the search, the box-no. fields of the database 13 are reviewed in order, until this identifier is found. Once the identifier is found, in stage 604 its location in the database 13, i.e. dBi, is defined, being now dBi = 39.

Next, as stage 605 this defined database location dBi = 39 is converted to a 3-dimensional storage-location arranged, i.e. to a co-ordinate form (X, Y, Z). One example of such a definition algorithm can be easily created at the algorithm level as three loops within each other, in such a way that, in the form of C pseudo code it is

```
 convert_dBi_to_XYZ(int dBi)         /* function heading, in
                                     which dBi is the parameter
                                     defined in stage 604 */
 
 {
 /* lets introduce as integers the co-ordinate variables X, Y, Z,
 which are initialised as -1 and the index counter i, which is
 initialised as 0 */
 
 int X = -1, Y = -1, Z = -1, i = 0;
 
 /* lets initialise the co-ordinate variables' maximum values on
 the basis of the storage-location arrangement (= 4*4*4) */
 
 int max_X = 3, max_Y = 3, max _ Z = 3;
 
 for ( ; (X <= max X && i <= dBi); X++) {//X-loop
  for (Y = -1; (Y < max_Y && i <= dBi); Y++) {//Y-loop
       if (i > dBi) (Y-; break; )
   for (Z = -1; (Z < max_Z && i <= dBi; i++) {//Z-loop
          Z = Z + 1;
 }}}
 return (X, Y, Z); // return location in XYZ form
 }
```

In the above presentation, i must thus be understood as an increasing counter, which is always increased up to the found index dBi of the database 13, from which the identifier of the box 11.5 being sought was found. The order of execution of the loop is set to take into account the relative location of the storage locations to each other systematically, which in this case corresponds to the consecutiveness according to their order in the actual database 13.

Now, if dBi is 39 according to the example, then at first the innermost Z loop is executed four times, increasing the counter index i by one on each cycle. We are then in the XY location (0, 0). After this, a return is made in the loop structure one level upwards, i.e. to the Y loop. There the Y variable is increased by one, i.e. a move is made in the queue X = 0 to the following row Y = 1. The Y increase is followed by a return to the Z loop, where once again the counter index i is increased continuing from the previous value. The Z variable returns to zero when returning to the Z loop, because we are now once again in the lowest position of the XY location (0,1).

Once the variable Y has reached the value 3, i.e. the queue X = 0, as a result of these loop executions, all the rows 0 - 3 have been gone through, and the highest, i.e. X level, in the loop is reached. There the X variable is increased by a value of one, which corresponds to moving to the following queue X = 1. The loop structure is continued to be gone through in a manner corresponding to that above, until the counter index i exceeds the value dBi. As a result of this the condition for the execution of the loops (i <= dBi) is no longer valid and as a result the execution of the loops terminates at this point.

When leaving the loops, the values of the variables X, Y and Z at that moment tell of the location of the box 11.5 in the warehouse 12, with an accuracy of the queue X, the row Y, and the layer Z (2, 1, 3). The values of these variables are returned at the end of the sub-program (return statement). Other, more refined algorithmic implementations for determining the XYZ location will also be obvious to one versed in the art. Thus, for example, the violent ending of the Y-loop level (break) in the if statement and the related reduction of the Y variable by one (Y--) may be completely unnecessary.

Before the termination 607 of the procedure, the XYZ location (2,1,3) of the sought box 11.5 in the warehouse 12 can be printed as stage 606. This will illustrate the location of the box 11.5 considerably more clearly than, for example, a one-dimensional manner of presentation (for example, simply the database 13 index dBi).

According to one first embodiment, the storage-unit identifiers can thus individuate each individual box, as generally described in the above embodiments. According to a second embodiment, the storage-unit identifiers can also individuate, for example, a product batch, which includes two or more boxes or heaps. In that case, the individual box may not be of interest and interest can be directed instead to the actual product batch, which the product-batch identifier in question individuates.

In such a product-batch individuating embodiment, the fork lift 15 may bring an arbitrarily sized product batch to the warehouse 12, which can include, for example, five boxes, in each of which there can be, for example, the same specific variety of potato. Also other kinds of criterion for forming product batches are obvious, not only those based on the product variety. A second example is itemization according to producer. For example, in connection with bringing the first box to the warehouse, at least an identifier individuating the batch in question can be read. Otherwise the storage operation stages can correspond to the embodiments already described.

The other four boxes belonging to the product batch in question can be stored in different queues, for example, in such a way that in each queue there is only one box belonging to the product batch in question. Of course, several boxes belonging to the same batch can be stored in the same queue. A flow diagram for performing storage of this kind is shown in Figure 7. In the case of these other boxes, however, it is not necessary any longer to read the identifiers individuating the boxes, instead the individuation of each box in the database takes place using the product-batch identifier read in connection with the storage of the first box. This is set is stage 701. Of course, in this case it is also possible to read the identifiers, for example, the identifier individuating a box, in the case of each box, but if it is desired to distinguish the boxes in question as a single product batch, the identifiers indicating the product batch in all five boxes can be identical.

In addition, it must be further noted that both in the product-batch embodiment and in the other embodiments already described above it is not at all necessary to read as neighbourhood information the identifier data concerning the boxes. Instead purely the dimension data of the storage location in question, in which the box/boxes are stored at that time, can be read/entered by the fork lift truck driver as the neighbourhood / dimension information. Stated more generally, in connection with the storage event, it is possible to notify the storage-location data of the storage unit being stored, in at least one dimension, on the basis of which dimension information the said storage unit's storage-unit identifier is then recorded in the database 13 of the central unit 21. The sub-stages (206, 207) and (208 - 210) of Figures 2a and 2b can also be alternatives.

As stage 705, it is possible to enter, for example, an identifier concerning queue X, to which queue the box is brought/left in on this occasion. If the queues are filled in order, in such a way that all the vertical Z locations are utilized starting from the first row (Y = 0) of the queue, it will then be possible to search the database 13 for, for example the records reserved for the queue X in question, and from these to search for the first free record of the queue in question, which corresponds to the next free storage location of the queue located in stage 703. The identifier of the box/product batch can, on the basis of this, be recorded in the first free location of this queue X in the database in stage 708, in which it is left in stage 704. The stages 706 and 707 can be implemented as described above. Information concerning the product batch can also be left without being transferred in the case of these other boxes, if the server 21 already knows what product batch is being stored this time. Once the product batch has been stored, the server 21 can be informed of this.

Figure 8 shows one example of a graphical presentation, which can be formed from the information arranged in the database 13. The location of each product batch in the warehouse 12 can be easily seen from this. In this case, the queues of the warehouse are named A - Q and the rows 1 - 12. Each product batch has been given its own graphic symbol, which is then shown in the storage locations corresponding to the batch. In this case, the boxes are stacked four deep (location G, 4).

The system and method according to the invention are based on management of the totality, in which the data system itself is utilized. In the warehouse 12, it is no longer necessary to maintain location identifiers individuating the storage locations in each location/dimension. In addition, the invention eliminates the need for cost-intensive positioning systems. As the locations are linked relatively in a set manner to each other and, in addition, the location arrangement of the warehouse is known, it is possible from these data to define and set the location of each box 11.1 - 11.10 in the warehouse 12. It is important to know the location of each unit/product batch in the warehouse 12 even from the point of view of warehouse logistics. Through the invention, this is possible by means of a database, in which there can be only information concerning the identifiers of the units.

Through the invention, the location arrangement of the warehouse 12 is very adaptable, taking into account different storage situations. First of all, through the invention the boxes can now be stored very densely, if the situation permits this. This is progressive in terms of the use of space in the warehouse 12.

In addition, the driver of the fork lift 15 no longer needs, through the invention, to try to move in cramped spaces between boxes, in order to determine their storage location. Through the invention, it is sufficient for information to be read/entered concerning the units already in the warehouse 12 and/or at least partly information on the filled storage locations (for example, queue information). This can even be carried out from the fork lift 15, without there being any need to leave it. This is a clear work-safety advantage.

On the other hand, through the invention the boxes can also be stored widely apart from each other, if the situation requires this for some reason. In the case of fresh produce, such a situation may arise, for example, when the produce being stored is damp, or even wet. The greater spacing between the storage-locations will then improve the air circulation in the warehouse 12, among other things. In a more widely-spaced form of storage of this kind, each box has, however, its own unambiguous storage location, which is now, however, wider than it would be in dense filling. When information on the wider spacing reaches the data system, it is able to adapt to the situation and can take it into account in the location arrangement of the warehouse 12. It is quite obvious that in this kind of case it would not be possible, for example, to apply electrical connections between the boxes in order to transmit their location data to the data system, as the boxes would be at a distance from each other, for example, in the row and/or queue direction.

Through the invention, it becomes possible surprisingly to vary the storage-location arrangement. In large-scale commercial warehouses, in which, for example, there may be as many as tens of box rows, the number of queues may differ by one or even several queues between dense filling and more widely-spaced filling, depending on the empty space left between queues. If an attempt were to be made in such a warehouse to arrange visual identifiers to indicate the queues in each storage manner (wider and denser), this presentation would become extremely confusing and difficult to comprehend. Through the invention, the location arrangement too of the warehouse can be made very adaptive and the precise locations of the units are no longer of great importance.

Even though the invention is described above only in the case of boxes, it can also be applied equally, for example, to large sacks, or to other types of unit, or even to the articles/products themselves, without actual storage media/containers. The term 'storage unit' itself can indeed be understood very widely in the context of the invention, as stated above. Various kinds of shelving systems can also be possible, as the basic idea of the invention in no way prevents their application too.

Reference was made above in several places to the heap storing of products, according to which the concept 'storage unit' can also be understood as heaps. In that case, the products can be brought to the warehouse 12, for example, by tractor, or using a bucket fitted to a fork-lift truck 15, which tips its load into the set queue after the previous heap. In heap storing, the queues can be separated from each other, for example, by partitions, by which the concept 'warehouse' can also be understood as a partitioned space, instead of an open unified space. Thus the product-batch information (variety/producer), for example, can be recorded in the database 13. Recording can take place in the database location dBi, which is defined from the read/entered queue identifier (X = 5), where the load was tipped.

The recording in the database 13 takes place, for example, at the 'end' of the preceding product batch in the queue in question, or in some other relative manner, from which it can be unambiguously decided that the product batches are sequentially in the queue in question, as described above. Because the heaps are now not necessarily equipped with physical identifiers, it is not possible, for example, to read the identifier of the previous heap from anywhere. This embodiment shows clearly that the invention can be implemented even by entering one dimension data and without the identifiers/their reading of the preceding product batches/units already in the warehouse 12. Of course, a corresponding procedure is also possible in the case of boxes.

In addition, the invention relates to a warehouse data system, in which location information of storage units 11.1 - 11.10 is arranged to be maintained in a warehouse 12, which includes a processor functionality 21, CPU for processing the warehouse database 13. The warehouse data system's processing functionality 21, CPU is arranged to be used to execute the program product MEM, 23 implementing the method according to the invention. In this connection, the processing of the warehouse database 13 can be understood as, for example, the updating of the database 13 (for example, the bringing of a storage unit to the warehouse 12, its removal from the warehouse 12, or its transfer in the warehouse 12 from one storage location to another), or simply the monitoring of the storage-location situation, without actual activities to be performed in the warehouse 12.

In addition, the invention also relates to a transfer device 15, which can be arranged to be used in the warehouse system 10 according to the invention. The storage-unit handling means of such a transfer device 15 include lifting means 18 that are, as such, known. In connection with the lifting means 18 there are detector means 19 for triggering a storage-unit 11.1 - 11.10 handling event.

It must be understood that the above description and the related figures are only intended to illustrate the present invention. The invention is thus in no way restricted to only the embodiments disclosed or stated in the Claims, but many different variations and adaptations of the invention, which are possible within the scope on the inventive idea defined in the accompanying Claims, will be obvious to one versed in the art.

## Claims

1. Warehouse system (10), which includes
- a large number of individuated storage units (11.1 - 11.10),
- a warehouse (12), in which the storage units (1.11 - 11.10) are arranged to be stored in storage locations,
- a central unit (21), by means of which a database (13) is arranged to be maintained on the storage situation of the warehouse (12), in which database (13) data (14.1 - 14.10) is arranged to be maintained concerning at least the storage units (11.1 - 11.10) stored in the warehouse (12) and the storage location of the storage units (11.1 - 11.10), and
- a transfer device (15) for handling the storage units (11.1 - 11. 10), which is equipped with data-entry means (16.1 - 16.3) for entering data (14.1 - 14.10, 22.1 - 22.10) concerning storing and data-transfer means (17) for transferring data (14.1 - 14.10, 22.1 - 22.10) to the central unit (21),
**characterized in that** at least some of the storage locations of the storage units (11.1 - 11.10) are arranged to be defined from the data (11.1 - 11.10, 14.1 - 14.10) in the database (13) itself, indicating the storage units (11.1 - 11.10) already in the warehouse (12).

2. Warehouse system (10) according to Claim 1, **characterized in that** at least some of the storage units (11.1 - 11.10) are equipped with readable storage-unit identifiers (14.1 - 14.10) and that the storage locations are arranged to form an arrangement comprising three dimensions (X, Y, Z) in the warehouse (12), in which arrangement
- some of the storage units (11.1) are arranged to act as fixed-point units, in relation to which the other storage units (11.1 - 11.10) are arranged to be stored in a set manner and
- the storage-unit identifiers (14.2 - 14.10) of the storage units (11.2 - 11.10) can be arranged in the database (13), in such a way that their relative location relative to the other storage units (11.1 - 11.10) can be defined the location data of the storage units (11.1 - 11.10) in the arrangement comprising three dimensions (X, Y, Z).

3. Warehouse system (10) according to Claim 1 or 2, **characterized in that**, in the said arrangement comprising three dimensions (X, Y, Z), the storage units (11.1 - 11.10) are arranged to be stored in queues (X), several of which can be arranged in parallel (Y), and in which queue (X) the storage units (11.1 - 11.10) are arranged to be at least two on top of each other (Z), and in at least one (X) of which dimensions (X, Y, Z) the storage-location identifiers (22.1 - 22.10) are arranged, for individuating the location of a storage unit (11.1 - 11.10) in the said dimension (X) .

4. Warehouse system (10) according to any of Claims 1 - 3,
**characterized in that** the storage-unit handling means of the transfer device (15) include lifting means (18), in connection with which detector means (19) are arranged, for triggering the storage-units' (11.1 - 11.10) handling event, which detector means comprise, for example, a force sensor (19).

5. Warehouse system (10) according to any of Claims 1 - 4,
**characterized in that** the detector means comprise, in addition, a sensor (20) for detecting the handling height of the storage units (11.1 - 11.10).

6. Warehouse system (10) according to any of Claims 1 - 5,
**characterized in that** the said readable storage-unit identifier to be attached to the storage units (11.1 - 11.10) is at least one remotely readable barcode (14.1 - 14.10) to be fitted to at least one side of it and the data-entry means in the transfer device (15) is at least one barcode remote reader (16.1 - 16.3).

7. Method for maintaining location information on storage units (11.1 - 11.10) in a warehouse system (12), in which method
- a large number of individuated storage units (11.1 - 11.10) are stored in storage locations,
- a database (13) is arranged to be maintained of the storage situation in the warehouse (12), in which database (13) data (14.1 - 14.10) is maintained concerning at least the storage units (11.1 - 11.10) stored in the warehouse (12) and the storage location of the storage units (11.1 - 11.10), and
- the storage units (11.1 - 11. 10) are handled in the warehouse (12) using a transfer device (15), which is used to perform data-transfer with the central unit (21) concerning data (14.1 - 14.10, 22.1 - 22.10) relating to storing,
**characterized in that** at least some of the storage locations of the storage units (11.1 - 11.10) are defined from the data (11.1 - 11.10, 14.1 - 14.10) in the database (13) itself, indicating the storage units (11.1 - 11.10) already in the warehouse (12).

8. Method according to Claim 7, **characterized in that** the storage locations form an arrangement comprising three dimensions (X, Y, Z) in the warehouse (12), in which
- some of the storage units (11.1) act as fixed-point units, in relation to which the other storage units (11.1 - 11.10) are stored in a set manner and
- the storage-unit identifiers (14.2 - 14.10) of the storage units (11.2 - 11.10) are arranged in the database (13), in such a way that their relative location relative to the other storage units (11.1 - 11.10) can be defined the location of the storage units (11.1 - 11.10) in the arrangement comprising data three dimensions (X, Y, Z).

9. Method according to Claim 7 or 8, **characterized in that** at least some of the storage units (11.1 - 11.10) are equipped with readable storage-unit identifiers (14.1 - 14.10) and that, in the said arrangement comprising three dimensions (X, Y, Z), the storage units (11.1 - 11.10) are stored in queues (X), several of which are arranged in parallel (Y), and in which queue (X) the storage units (11.1 - 11.10) are arranged to be at least two on top of each other (Z), and at least one (X) of which dimensions (X, Y, Z) includes storage-location identifiers (22.1 - 22.10), for individuating the location of a storage unit (11.1 - 11.10) in the said dimension (X).

10. Method according to any of Claims 7 - 9, **characterized in that** the transfer device (15) include detector means (19), by means of which a storage-unit (11.1 - 11.10) handling event is detected and which detector means comprise, for example, a force sensor (19).

11. Method according to any of Claims 7 - 10, **characterized in that**, in connection with the storage-unit (11.1 - 11.10) handling event, the handling height of the storage units (11.1 - 11.10) is also detected.

12. Method according to any of Claims 7 - 11, **characterized in that**, in connection with the storage event, the storage-location data of the storage unit (11.1) being stored is defined in at least one dimension, on the basis of the dimension data of which the storage-unit identifier (14.1) is recorded in the database (13) of the central unit (21).

13. Program product for maintaining location information of storage units (11.1 - 11.10) in a warehouse (12), which program product comprises a memory medium (MEM) and program code stored on the memory medium (MEM), and in which a database (13) is maintained on the storage situation of the warehouse (12), in which data (14.1 - 14.10) is maintained concerning at least the storage units (11.1 - 11.10) stored in the warehouse (12) and the storage locations of the storage units (11.1 - 11.10),
**characterized in that** the program code comprises code means (23) configured to define of the storage locations of at least some the storage units (11.1 - 11.10) from the information (11.1 - 11.10, 14.1 - 14.10) in the database (13) itself, indicated by the storage units (11.1 - 11.10) already in the warehouse (12).

14. Warehouse data system, in which location information on the storage units (11.1 - 11.10) in the warehouse (12) is arranged to be maintained, which data system includes a processor functionality (21, CPU), by means of which the warehouse database (13) is arranged to be processed, **characterized in that** by the processor functionality (21, CPU) of the warehouse data system is arranged to be used to execute the program product (MEM, 23) according to Claim 13.

15. Transfer device, which is arranged to be used in a warehouse system (10) according to any of Claims 1 - 6, and the storage-unit handling means of which transfer device (15) include lifting means (18), **characterized in that** detector means (19) are arranged in connection with the lifting means (18), for triggering a storage-unit (11.1 - 11.10) handling event, which detector means comprise, for example, a force sensor (19).
